# EUROPEAN PATENT SPECIFICATION

(11) **EP 2 731 449 B1**
(45) Date of publication and mention of the grant of the patent: **19.11.2014**
(21) Application number: 12732671.8
(22) Date of filing: 06.07.2012
(51) Int. Cl.: A23K 1/16, A23K 1/18

(54) **PALATABILITY ENHANCERS COMPRISING FREE AMINO ACIDS FOR USE IN PET FOODS**
SCHMACKHAFTIGKEITSVERSTÄRKER MIT FREIEN AMINOSÄUREN ZUR VERWENDUNG IN TIERNAHRUNG
ACTIVATEURS DE LA SAPIDITÉ COMPRENANT DES ACIDES AMINÉS LIBRES POUR UNE UTILISATION DANS LES ALIMENTS POUR ANIMAUX DOMESTIQUES

(30) Priority: 12.07.2011 EP 11305908; 12.07.2011 US 201161506932 P
(43) Date of publication of application: 21.05.2014
(73) Proprietor: Spécialités Pet Food, 56250 Elven (FR)
(72) Inventor: NICERON, Cécile, F-56000 Vannes (FR); LEVESQUE, Anne, F-56250 La Vraie Croix (FR); MICHEL-SALAUN, Françoise, F-56250 Elven (FR)
(74) Representative: Regimbeau
(86) International application number: PCT/EP2012/063267
(87) International publication number: WO 2013/007639

(56) References cited:
- WO-A1-95/28854
- WO-A1-2004/047553
- US-A- 3 697 287
- US-A- 4 267 195
- US-A- 4 282 254
- US-A1- 2003 072 866

## Description

The present invention generally relates to the field of pet food.

More precisely, the present invention concerns a palatability-enhancing composition for pet food, wherein said composition comprises about 1 to 70% by weight of free amino acids, as well as uses thereof, especially for producing pet foods having enhanced palatability.

Cat food is more specifically concerned by the present invention.

### BACKGROUND OF THE INVENTION

Pets are well taken care of by their owners which provide them a proper selection of foods. Those foods include not only pets' usual nutritionally-balanced diet, but also supplements, treats, and toys. Pets, like humans, are attracted to and eat more regularly and easily foods which they find palatable. Therefore, palatability enhancers are extremely important for animal consumption. Animal foods such as pet foods typically contain flavour compositions to increase the palatability thereof, and to make them appealing to pets. A large number of palatability enhancers have been described so far.

As an example, U.S. Patent No. 4,267,195 (Boudreau et al.) discloses a palatability-enhancing material conferring raw meat flavours to dog food formulations, which is selected from the group consisting of L-proline, L-cysteine, L-histidine, L-lysine, inosine 5'-triphosphate (ITP), inosine 5'-diphosphate (IDP), adenosine 5'-triphosphate (ATP), and combinations thereof. Another example is described in U.S. Patent No. 4,282,254 (Franzen et al.), wherein the palatability of dog foods is increased by adding to dog food preparations an amount of amino acids between 0.001 and 0.8% selected from the group consisting of L-phenylalanine, L-tyrosine, L-tryptophan, L-methionine, L-arginine, L-isoleucine, L-leucine, L-serine, and combinations thereof.

However, food palatability differs not only from one type of food to another, but also from one animal species to another. For example, a palatability enhancer effective in dry pet foods is usually not effective when used in semi-moist or wet pet foods. Moreover, a palatability enhancer effective with cats is often not effective with dogs. This difference between cats and dogs is further illustrated in the Examples below.

There is therefore a continuing need for new palatability enhancers, which provide a robust flavour and which are easily and effectively usable for companion animals including pets such as dogs and cats, in types of foods so different as dry, intermediate and wet foods.

The present invention here provides new compositions comprising appropriate amounts of free amino acids that have been selected for their ability to enhance palatability of cat food.

### DEFINITIONS

Unless specifically stated otherwise, percentages are expressed herein by weight of a product reference (in particular, a palatability-enhancing composition) on a dry matter basis. The person skilled in the art will appreciate that the term "dry matter basis" means that an ingredient's concentration or percentage in a composition is measured after the free water has been removed, or determined on the basis of the weight of the composition once the weight of any free moisture in the composition has been subtracted.

In the present disclosure, ranges are stated in shorthand, so as to avoid having to set out at length and describe each and every value within the range. Any appropriate value within the range can be selected, where appropriate, as the upper value, lower value, or the terminus of the range. For example, a range of 0.1-1.0 represents the terminal values of 0.1 and 1.0, as well as the intermediate values of 0.2, 0.3, 0.4, 0.5, 0.6, 0.7, 0.8, 0.9, and all intermediate ranges encompassed within 0.1-1.0, such as 0.2-0.5, 0.2-0.8, 0.7-1.0, etc.

As used throughout, the singular form of a word includes the plural, and vice versa, unless the context clearly dictates otherwise. Thus, the references "a", "an", and "the" are generally inclusive of the plurals of the respective terms. For example, reference to "a method" or "a food" includes a plurality of such "methods" or "foods". Similarly, the words "comprise", "comprises", and "comprising" are to be interpreted inclusively. Likewise the terms "include", "including" and "or" should all be construed to be inclusive. All these terms however have to be considered as encompassing exclusive embodiments that may also be referred to using words such as "consist of".

The methods and compositions and other embodiments exemplified here are not limited to the particular methodologies, protocols, and reagents that are described herein because, as the skilled artisan will appreciate, they may vary.

Unless defined otherwise, all technical and scientific terms, terms of art, and acronyms used herein have the meanings commonly understood by the skilled artisan in the field(s) of the invention, or in the field(s) where the term is used. Although any compositions, methods, articles of manufacture, or other means or materials similar or equivalent to those described herein can be used in the practice of the present invention, the preferred compositions, methods, articles of manufacture, or other means or materials are described herein.

The term "about" as used herein when referring to a measurable value such as an amount, a temporal duration, and the like, is meant to encompass variations of ±20%, more preferably ±10%, even more preferably ±5% from the specified value, as such variations are appropriate to reproduce the disclosed methods and products.

The term "palatability" means a relative preference of an animal for one food composition to another. Palatability refers to the overall willingness of an animal to eat a certain food. Advantageously but not necessarily, palatability further refers to the capacity of the eaten food to satisfy the animal. Whenever an animal shows a preference, for example, for one of two or more foods, the preferred food is more "palatable", and has "enhanced palatability". The relative palatability of one food compared to one or more other foods can be determined, for example, in side-by-side, free-choice comparisons, e.g., by relative consumption of the foods, or other appropriate measures of preference indicative of palatability. It can advantageously be determined by a standard testing protocol in which the animal has equal access to both compositions such as a test called "two-bowl test" or "versus test" (see below). Such preference can arise from any of the animal's senses, but typically is related to, *inter alia,* taste, aroma, flavour, texture, smell and/or mouth feel.

A pet food stated herein to have "enhanced palatability" is one for which a pet exhibits preference relative to a control composition. Advantageously, a pet food having enhanced palatability is appealing or pleasing not just to pets, but to pet owners as well.

The terms "palatability enhancers", "palatants", "flavours", "palatability agents", "appetizing factors", "flavour compositions", "palatability-enhancing compositions", "flavour enhancers", and any other similar terms mean any material that enhances the palatability of a food composition to an animal. A palatability enhancer may be a single material or a blend of materials, and it may be natural, processed or unprocessed, synthetic, or part of natural and part of synthetic materials. Typically, a palatability enhancer for animal food is an edible composition that provides an aroma, taste, aftertaste, smell, mouth feel, texture, and/or organoleptic sensation that is appealing or pleasing to the target animal.

For example, a palatability enhancer may contribute to initial food appeal by its smell and/or to continued consumption by its smell but also by its taste and/or its aftertaste, and/or its mouth feel, and/or its texture. "Initial appeal" is an aspect of palatability that induces an animal to initially taste or try a food, and that can be measured by the criteria "first choice" or "first food consumed". "Continued consumption" is an aspect of palatability that induces an animal to continue consuming a food that has been initially only tasted or tried.

The term "animal" is used in a general sense and means a human or other animal that may choose an edible composition based upon its palatability, including avian, bovine, canine, equine, feline, lupine, murine, ovine, and porcine animals, thus encompassing pets.

The present invention preferably concerns pets.

The terms "pet" and "companion animal" are synonymous and mean any domesticated animal including, without limitation, cats, dogs, rabbits, guinea pigs, ferrets, hamsters, mice, gerbils, birds, horses, cows, goats, sheep, donkeys, pigs, and the like.

In the context of the present invention, cats are preferred. However, the invention may be adapted for use with other classes of companion animals. If desired, the invention can be tested to evaluate its suitability for use with different classes of animals that may be considered as companion animals.

The term "food" as used herein means a product or composition that is eaten by an animal and provides at least one nutrient to the animal. The term "food" includes any food, feed, snack, food supplement, treat, toy (chewable and/or consumable toys), edible meal substitute, or edible meal replacement. Drinks and beverages are not encompassed within the term "food."

The term "pet food" means a composition intended for consumption by a pet.

There are three main categories or classes of pet foods depending on their moisture content, which is either low or medium or high:
- dry or low moisture-containing products (having less than about 15% moisture): they usually produce a crunching sound when chewed by a pet; they are generally highly nutritious, may be inexpensively packaged (e.g., in bags or boxes), and are highly convenient to store and use; however, they are typically the least palatable;
- canned or wet or high moisture-containing products (having more than about 50% moisture): typically high meat-containing products, they are generally considered as the most palatable to pets; they are usually costly to produce and package (mainly in cans);
- semi-moist or semi-dry or soft dry or soft moist or intermediate or medium moisture-containing products (having from about 15 to about 50% moisture): usually packaged in appropriate bags or boxes, they are commonly less palatable than canned foods but more palatable than dry foods.

Nutritionally-balanced pet foods are widely known and used in the art.

A "nutritionally-complete", "nutritionally-balanced" or "complete and nutritionally-balanced food" is one that contains all known required nutrients for the intended recipient or consumer of the food, in appropriate amounts and proportions based, for example, on recommendations of recognized or competent authorities in the field of companion animal nutrition. Such foods are therefore capable of serving as a sole source of dietary intake to maintain life or promote production, without the addition of supplemental nutritional sources.

The term "kibble" used herein refers to particulate chunks or pieces formed by either a pelleting or extrusion process. Typically, kibbles are produced to give dry and semi-moist pet food. The pieces can vary in sizes and shapes, depending on the process or the equipment. For instance, kibbles can have spherical, cylindrical, oval, or similar shapes. They can have a largest dimension of less than about 2 cm for example.

The term "chunk-in-"X" products" mean herein all edible foodstuffs comprising chunks in a preparation (said preparation being "the X preparation"). Classical examples thereof are chunk-in-jelly products, chunk-in-gravy products, and the like. This category of "chunk-in-X" products encompasses also edible forms other than chunks that may be contained in the X preparation such as a jelly, a gravy, and the like. For instance, other forms than chunks may be sliced products, grated products, etc.

The term "loaf" used herein refers to edible foodstuffs obtained as moist products, and includes terrines, pâtés, mousses, and the like.

The term "food supplement" or "dietary supplement" or "supplement" means a product that is intended to be eaten in addition to the normal animal diet. Drinks and beverages are excluded. Dietary supplements may be in any edible form, e.g., solid, liquid, gel, paste, tablets, capsules, powder, and the like. Preferably they are provided in convenient dosage forms. In some embodiments, they are provided in bulk consumer packages such as bulk powders. In other embodiments, supplements are provided in bulk quantities to be included in other food items such as snacks, treats, supplement bars, and the like. Palatability-enhancing compositions can be used to improve palatability of dietary supplements in the same manner as they are used to improve palatability of nutritionally-balanced foods.

The term "treat" (or "biscuit") means any food item that is designed to be fed to a pet, preferably at non-meal time, by the owner to help, promote or sustain a bonding process between a pet and its owner. Examples of treats for dogs are bones. Examples of treats for cats are stuffed pillows and chewable sticks. Treats may be nutritional or not. Treats often contain palatability enhancers in a manner comparable to nutritionally-balanced foods.

"Toys" include, for example chewable toys. Examples of toys for dogs are artificial bones. Examples of toys for cats are chewable cat toys. Toys further include partially consumable toys (e.g., comprising plastic components) or fully consumable toys (e.g., rawhides).

As used herein, the term "amino acid" means a molecule containing both an amino group and a carboxyl group. In some embodiments, the amino acids are α-, β-, γ- or δ-amino acids, including their stereoisomers and racemates. As used herein, the term "L-amino acid" denotes an α-amino acid having the L configuration around the α-carbon, that is, a carboxylic acid of general formula CH(COOH)(NH₂)-(side chain), having the L-configuration. The term "D-amino acid" similarly denotes a carboxylic acid of general formula CH(COOH)(NH₂)-(side chain), having the D-configuration around the α-carbon. Side chains of L-amino acids can include naturally occurring and non-naturally occurring moieties. Non-naturally occurring (i.e., unnatural) amino acid side chains are moieties that are used in place of naturally occurring amino acid side chains in, for example, amino acid analogs.

The main naturally occurring amino acids are listed in Table 1 below.

**Table 1**

| **Symbol** | **Meaning** |
|---|---|
| Ala | Alanine |
| Asp | Aspartic Acid |
| Asn | Asparagine |
| Arg | Arginine |
| Cys | Cysteine |
| Glu | Glutamic Acid |
| Gly | Glycine |
| Gln | Glutamine |
| His | Histidine |
| Ile | Isoleucine |
| Leu | Leucine |
| Lys | Lysine |
| Met | Methionine |
| Phe | Phenylalanine |
| Pro | Proline |
| Ser | Serine |
| Thr | Threonine |
| Trp | Tryptophan |
| Tyr | Tyrosine |
| Val | Valine |

By the term "free amino acids", it is meant herein amino acids that are individually present as unbound ingredients in a composition. Free amino acids do not form part or are not contained into peptides or proteins. When contained in a palatability-enhancing composition, the free amino acids are not expected to significantly react *in situ* with other ingredients of the composition. They are thus comprised as such in the composition. However, once the palatability-enhancing composition is added to a pet food preparation, the free amino acids contained in the composition can react to some extent with other ingredients of the pet food preparation.

The term "inorganic phosphate compound" as used herein means a chemical compound comprising at least one phosphorus atom. This chemical compound may be natural or synthetic, ionized or not.

"Inorganic pyrophosphates" or "pyrophosphates" include alkali metal pyrophosphates, encompassing monoalkali metal pyrophosphates and polyalkali metal pyrophosphates.

The formula MₓH_{y}PₙO₃ₙ₊₁ when n=2 is the general formula for alkali metal pyrophosphates. When M is a univalent metal, then x+y=n+2. When M is a divalent metal, then x+y=n. Univalent metal pyrophosphates and divalent metal pyrophosphates can be used herein.

Examples of monoalkali metal pyrophosphates include sodium trihydrogen pyrophosphate, potassium trihydrogen pyrophosphate, calcium hydrogen pyrophosphate, barium hydrogen pyrophosphate, magnesium hydrogen pyrophosphate.

Polyalkali metal pyrophosphates encompass dialkali metal pyrophosphates, trialkali metal pyrophosphates, tetralkali metal pyrophosphates, etc.

Examples of dialkali metal pyrophosphates are disodium dihydrogen pyrophosphate, dipotassium dihydrogen pyrophosphate, dicalcium pyrophosphate, dibarium pyrophosphate, dimagnesium pyrophosphate, dimanganese pyrophosphate, dizinc pyrophosphate.

Trialkali metal pyrophosphates are, for example, trisodium hydrogen pyrophosphate, tripotassium hydrogen pyrophosphate.

Pyrophosphates may be anhydrous or hydrated.

"Polyphosphates" have the formula MₓH_{y}PₙO₃ₙ₊₁ where n is 3, 4, 5,...

Examples of polyphosphates are tripolyphosphates and hexapolyphosphates.

Tripolyphosphates include sodium tripolyphosphate, potassium tripolyphosphate, calcium tripolyphosphate, and magnesium tripolyphosphate.

Hexapolyphosphates include sodium hexapolyphosphate, potassium hexapolyphosphate, calcium hexapolyphosphate, and magnesium hexapolyphosphate.

Examples of monophosphates include adenosine monophosphate (AMP), guanosine monophosphate (GMP), inosine monophosphate (IMP), uridine monophosphate (UMP), cytidine monophosphate (CMP).

The term "animal digest" means herein material which results from chemical and/or enzymatic hydrolysis of clean, undecomposed animal tissue. In some embodiments, an animal digest as used herein is fully consistent with the definition promulgated by the Association Of American Feed Control Officials, Inc. (AAFCO). Animal digest is preferably derived from animal tissues, including cold-blooded marine animals, excluding hair, horns, teeth, hooves, and feathers. The skilled artisan will appreciate that while such tissues are not preferred, trace amounts might be found unavoidably even under good manufacturing practices. Also not included are visceral contents or foreign or fecal matter, although trace contaminant amounts are sometimes present. An animal digest may be dried or not. Examples of animal digests are:
- digest of poultry(or pork, beef, sheep, lamb, fish, etc): material from poultry (pork, beef, etc) which results from chemical and/or enzymatic hydrolysis of clean and undecomposed tissue;
- digest of pork (or beef, sheep, lamb, fish, etc) by-products: material from pork (beef, etc.) which results from chemical and/or enzymatic hydrolysis of clean and undecomposed tissue from non-rendered clean parts from cattle (pigs, sheep, lamb, etc), other than meat, for example lungs, spleen, kidneys, brain, livers, blood, bone, partially-defatted low-temperature fatty tissue, and stomachs and intestines, freed of their contents;
- digest of poultry by-products: material which results from chemical and/or enzymatic hydrolysis of clean and undecomposed tissue from non-rendered clean parts of poultry, other than meat, such as livers, hearts, heads, feet, and viscera. As used herein, "poultry" encompasses any species or kind of bird, preferably chicken, turkey, duck, and the like; and
- digest of fish by-products: material which results from chemical and/or enzymatic hydrolysis of clean and undecomposed tissue from non-rendered clean parts from fish. As used herein, "fish" encompasses any species or kind of fish or crustaceans, preferably tuna, salmon, cod, whitefish, shrimp, sardine, and the like.

Animal digests may also be referred to as "animal products" or "animal by-products", all these terms being used herein as synonymous.

The terms "dairy products and by-products" include, without limitation, products and by-products derived from cheese, milk, whey, and the like.

The term "yeast" herein refers to any yeast, preferably inactive, as well as to yeast by-products that are compatible with compositions for animal consumption. Yeasts are well known in the art as being protein-rich. Yeasts include, without limitation, brewer's yeast, baker's yeast, torula yeast, molasses yeast, and the like. Yeast by-products include, without limitation, yeast extracts, yeast hydrolysates, cream yeasts, etc.

The term "single package" means that the components of a kit are physically associated in or with one or more containers and considered a unit for manufacture, distribution, sale, or use. Containers include, but are not limited to, bags, boxes, cartons, bottles, packages of any type or design or material, overwrap, shrink-wrap, stapled or otherwise affixed components, or combinations thereof. A single package may be containers of individual components physically associated such that they are considered a unit for manufacture, distribution, sale, or use.

As used herein, a "pet food ingredient" is any compound, composition or material that is suitable for pet consumption. Non-limiting examples of pet food ingredients are palatability enhancers, animal digests, proteins, peptides, amino acids, grains, carbohydrates, fats or lipids, nutrients, anti-oxidants, preservatives, surfactants, texturing agents, colouring agents, flavors, seasonings, etc.

As used herein, a "palatability-enhancing composition ingredient" is any compound, composition or material that is suitable for pet consumption. Non-limiting examples of palatability-enhancing composition ingredients are animal digests, proteins, peptides, amino acids, carbohydrates fats or lipids, nutrients, anti-oxidants, preservatives, surfactants, texturing agents, flavors, etc. Ingredients may be comprised as such in the palatability-enhancing composition, or they can be contacted into the composition and react *in situ* for producing transformed materials that are also encompassed by the term "palatability-enhancing composition ingredient". Examples of ingredients that react together in the composition are, without limitation, fats, peptides, amino acids, and carbohydrates, so as to obtain transformed materials such as Maillard reaction products, and the like. Amino acids that are used for *in situ* reacting with other ingredients such as carbohydrates are not considered as "free amino acids" as meant herein. "Proteins" include all conventional protein sources that are compatible for animal consumption, especially plant or vegetable proteins, animal proteins (such as casein or albumin or animal digests), and microbial proteins (e.g., yeast).

Examples of vegetable proteins are corn gluten, soy protein, soy flour, hydrolyzed vegetable protein (HVP), and the like.

Examples of grains are corn, milo, alfalfa, wheat, barley, rice, soy, and the like.

Examples of carbohydrates include dextrose, fructose, sucrose, polysaccharides, fibers, starches, and the like.

Examples of fats include tallow, oils (from any origin such as animal, fish, vegetable, dairy oils).

Examples of nutrients include, without limitation, vitamins, minerals and electrolytes, such as vitamins A, C, E, B12, D3, folic acid, D-biotin, cyanocobalamin, niacinamide, thiamine, riboflavin, pyridoxine, menadione, beta-carotene, calciumpantothenate, choline, inositol, calcium, potassium, sodium, zinc, iron, manganese, copper, iodine, and the like.

Anti-oxidants and preservatives are, for example, tocopherols, rosemary extract, potassium sorbate, sorbic acid, and the like.

"Surfactants" are molecules that are surface active. They typically have a hydrophilic portion (e.g., one or more head groups) and a hydrophobic (or lipophilic) portion (e.g., one or more tails). They are classified in various ways, for example according to their hydrophilic-lipophilic balance (HLB). They can also or alternatively be classified as non-ionic, ionic or zwitterionic compounds based on the presence or absence of formally-charged in the head group(s). Surfactants are well-known in the art. One can cite, for example, Tween surfactants. Surfactants include, without limitation, emulsifiers and wetting agents. In some instances, the terms "surfactants" and "emulsifiers" can be used interchangeably.

Examples of seasonings include corn syrup and molasses.

"Coating", as used herein, refers to the topical deposition of the palatability-enhancing composition onto the surface of the basal food composition, such as by spraying, dusting, and the like.

"Inclusion" as used herein, refers to the addition of the palatability-enhancing composition internally to the pet food preparation, by mixing it with other pet food ingredients, before further processing steps for obtaining the final pet food product (including thermal treatment and/or extrusion and/or retorting, etc).

As used herein, a "means for communicating information or instructions" is a kit component under any form suitable for providing information, instructions, recommendations, and/or warranties, etc. Such a means can comprise a document, digital storage media, optical storage media, audio presentation, visual display containing information. The means of communication can be a displayed web site, brochure, product label, package insert, advertisement, visual display, etc.

### DESCRIPTION OF THE INVENTION

As disclosed herein, the Inventors could select specific combinations of amino acids enabling to achieve a palatability effect when used in cat food. In addition, the Inventors could find out advantageous conditions of using said combinations of amino acids (in particular, in terms of amounts) in order to exhibit palatability-enhancing capacities.

It is herein disclosed a palatability-enhancing composition for pet food comprising about 1 to 70% by weight of free amino acids.

Said free amino acids comprise:
- at least two amino acids selected from the group consisting of:
   Ala, Glu, Pro, Leu, Asp, Tyr, Phe (List I), or
   Met, Glu, Pro, Gly, Leu, Asp, Tyr, Phe (List II); or
- at least three amino acids selected from the group consisting of:
   Ala, Met, Glu, Pro, His, Gly, Arg, Leu, Asp, Tyr, Phe (List III).

Thus, in a first aspect, the present invention relates to the use of a mixture of free amino acids comprising:
- at least two amino acids selected from the group consisting of:
   Ala, Glu, Pro, Leu, Asp, Tyr, Phe (List I), or
   Met, Glu, Pro, Gly, Leu, Asp, Tyr, Phe (List II); or
- at least three amino acids selected from the group consisting of:
   Ala, Met, Glu, Pro, His, Gly, Arg, Leu, Asp, Tyr, Phe (List III),
for preparing a palatability-enhancing composition for cat food, said composition comprising about 1 to 70% by weight of said mixture.

Preferably, said mixture of free amino acids comprises at least three amino acids selected from the group consisting of:
Ala, Glu, Pro, Leu, Asp, Tyr, Phe (List I), or
Met, Glu, Pro, Gly, Leu, Asp, Tyr, Phe (List II).

Preferably, said mixture of free amino acids comprises at least four amino acids selected from the group consisting of:
Ala, Met, Glu, Pro, His, Gly, Arg, Leu, Asp, Tyr, Phe (List III).

Preferably, the amino acids selected from List I or II or III are present in said palatability-enhancing composition in an amount as set forth in Table 2 below:

**Table 2**

| **Amino acid** | **Amount (% by weight of the palatability-enhancing composition)** |
|---|---|
| Ala | 0.08 - 30 |
| Glu | 0.10 - 20 |
| Pro | 0.05 - 20 |
| Leu | 0.08 - 25 |
| Asp | 0.05 - 20 |
| Tyr | 0.05 - 10 |
| Phe | 0.05 - 10 |
| Met | 0.02 - 11 |
| Gly | 0.04 - 20 |
| His | 0.01 - 10 |
| Arg | 0.06 - 17 |

In another embodiment, said palatability-enhancing composition comprises about 3 to 60% by weight of said mixture of free amino acids.

Under these circumstances, the amino acids selected from List I or II or III are preferably present in said palatability-enhancing composition in an amount as set forth in Table 3 below:

**Table 3**

| **Amino acid** | **Amount (% by weight of the palatability-enhancing composition)** |
|---|---|
| Ala | 0.20 - 25 |
| Glu | 0.30 - 17 |
| Pro | 0.20 - 17 |
| Leu | 0.30 - 20 |
| Asp | 0.20 - 17 |
| Tyr | 0.10 - 7.0 |
| Phe | 0.10 - 7.0 |
| Met | 0.06 - 6.0 |
| Gly | 0.08 - 17 |
| His | 0.05 - 7.0 |
| Arg | 0.20 - 12 |

In yet another embodiment, said palatability-enhancing composition comprises about 5 to 50% by weight of said mixture of free amino acids.

Under these circumstances, the amino acids selected from List I or II or III are preferably present in said palatability-enhancing composition in an amount as set forth in Table 4 below:

**Table 4**

| **Amino acid** | **Amount (% by weight of the palatability-enhancing composition)** |
|---|---|
| Ala | 0.40 - 20 |
| Glu | 0.50 - 13 |
| Pro | 0.30 - 13 |
| Leu | 0.50 - 17 |
| Asp | 0.30 - 13 |
| Tyr | 0.20 - 5.0 |
| Phe | 0.20 - 5.0 |
| Met | 0.10 - 4.0 |
| Gly | 0.20 - 12 |
| His | 0.08 - 4.0 |
| Arg | 0.30 - 10 |

Preferably, among the free amino acids that are contained in said mixture are further included one or more additional amino acids selected from the group consisting of:
Thr, Lys, Cys, Trp, Ile, Ser, Val, Asn, Gln (List IV).

Said additional amino acids are preferably present in said palatability-enhancing composition in an amount of about 0.01 to 25%, yet preferably about 0.1 to 20%, yet more preferably about 0.3 to 15%, and even more preferably about 0.5 to 12% by weight of the composition.

Advantageously, the palatability-enhancing composition comprises at least one inorganic phosphate compound as defined above.

Said inorganic phosphate compound is preferably selected from the group consisting of phosphoric acid, pyrophosphates, monophosphates, polyphosphates, and combinations thereof.

A preferred inorganic phosphate compound according to the present invention is a pyrophosphate compound selected from disodium pyrophosphate, trisodium pyrophosphate, tetrasodium pyrophosphate, dipotassium pyrophosphate, tripotassium pyrophosphate, tetrapotassium pyrophosphate, tetraferric pyrophosphate, and combinations thereof. A more particularly preferred pyrophosphate compound is trisodium pyrophosphate.

A preferred polyphosphate compound for use in the present invention is sodium tripolyphosphate.

Said inorganic phosphate compound is preferably present in the palatability-enhancing composition in an amount of about 0.01 to 75%, yet preferably about 0.05 to 70%, more preferably about 0.1 to 65%, yet more preferably about 0.25 to 60%, and even more preferably about 0.5 to 55%, by weight of the composition.

Advantageously, the palatability-enhancing composition comprises at least one animal digest as defined above.

Preferred animal digests are poultry product or by-product digests, pork product or by-product digests, and fish by-product digests.

Said animal digest is preferably present in said palatability-enhancing composition in an amount of about 0.01 to 99%, more preferably about 0.05 to 95%, yet more preferably about 0.1 to 90%, even more preferably about 0.2 to 85%, and yet even more preferably about 0.5 to 80% by weight of the composition.

Advantageously, the palatability-enhancing composition comprises yeast as defined above.

Preferred yeasts for use in the present invention are brewer's yeast, molasses yeast, and by-products thereof.

The yeast content in said palatability-enhancing composition is preferably of about 0.01 to 99%, yet preferably about 0.05 to 95%, more preferably about 0.1 to 90%, yet more preferably about 0.2 to 85%, and even more preferably about 0.5 to 80%, by weight of the composition.

Advantageously, the palatability-enhancing composition comprises one or more palatability-enhancing composition ingredients as defined above.

Preferred ingredients are Maillard reaction products obtained upon thermally reacting *in situ* carbohydrates and peptides and/or amino acids (said amino acids being not "free amino acids" as described herein).

The content of such ingredients in said palatability-enhancing composition is preferably of about 0.01 to 99%, yet preferably about 0.05 to 95%, more preferably about 0.1 to 90%, yet more preferably about 0.2 to 85%, and even more preferably about 0.5 to 80%, by weight of the composition.

The palatability-enhancing composition can be dry or liquid.

Another aspect of the present invention relates to a method for preparing a palatability-enhancing composition for cat food, comprising:
a) providing palatability-enhancing composition ingredients;
b) if necessary, grinding one or more of said ingredients;
c) providing a mixture of free amino acids comprising:
   - at least two amino acids selected from the group consisting of:
      Ala, Glu, Pro, Leu, Asp, Tyr, Phe (List I), or
      Met, Glu, Pro, Gly, Leu, Asp, Tyr, Phe (List II); or
   - at least three amino acids selected from the group consisting of:
      Ala, Met, Glu, Pro, His, Gly, Arg, Leu, Asp, Tyr, Phe (List III);
d) mixing about 1 to 70% by weight of said mixture with said palatability-enhancing composition ingredients of step a) and/or step b); and
e) obtaining said palatability-enhancing composition for cat food.

In particular embodiments, said method further comprises one or more intermediate steps between steps a) and c) above, such as:
f) chemically and/or enzymatically hydrolyzing the mix resulting from step a) or b); and/or
g) thermally treating the mix resulting from step a) or b) or f); and/or
h) further stabilizing the resulting composition of step a) or b) or f) or g) (by, e.g., acidification, addition of preservatives, and the like); and/or
i) optionally, drying the composition obtained from step a) or b) or f) or g) or h).

In yet a particular embodiment, said method further comprises an intermediate step h) for further stabilizing the mix resulting from step d) (by, e.g., acidification, addition of preservatives, and the like).

In a yet particular embodiment, two or more palatability-enhancing compositions or intermediates thereof (such as the mixes resulting from step d) or f) or g) or h)) can be mixed together in order to obtain a final palatability-enhancing composition for use in cat food. Should a drying step i) be performed, then said two or more palatability-enhancing compositions or intermediates thereof are advantageously mixed before said step i).

The person skilled in the art will be able to select appropriate steps, adapt said steps if need be, select appropriate order for the selected steps, given that some steps may be performed concomitantly according to usual practice in the art.

An example of a method for preparing a liquid palatability-enhancing composition is as follows. Liquid ingredients are combined in a mixer. Wet ingredients are ground or emulsified to a slurry and the liquid ingredients are combined therewith. A commercially available protease may be added to the slurry to hydrolyze proteins, and later inactivated with heat, acid or another method. Preservatives such as sorbic acid can also be added. Water is added to adjust the viscosity and the solids content of the slurry to facilitate spray application.

An example of a method for preparing a dry palatability-enhancing composition is as follows. Dry ingredients are combined in the desired proportions in a batch mixer and blended to achieve homogeneity. Alternatively, wet and dry ingredients are combined by mixing the wet ingredients with all or some of the dry ingredients in a mixer until a homogenous mixture is formed. The mixture is dried by evaporation or lyophilisation, for example, to form a dry, powdery product that is then blended with any remaining dry ingredients in a tumbler until homogeneous mixture is formed.

Another aspect of the present invention concerns a palatability-enhancing composition for cat food obtainable by a method as described above.

Yet another aspect of the present invention is related to a method for enhancing the palatability of a cat food or, in other words, for producing a cat food having enhanced palatability, wherein said method comprises:
a) adding to a cat food preparation, a palatability-enhancing composition as described above; and
b) obtaining a cat food having enhanced palatability.

Typically, dry pet foods such as kibbles can be prepared by different common methods. One of these methods, that is widely used, is a cooker-extruder method. In the cooker-extruder method, ingredients are first blended together to form an admixture. This admixture is transferred into a steam conditioner where it is sufficiently moistened to become extrudable. The admixture then enters a cooker-extruder where it is cooked at an elevated temperature and pressure and then forced out of the apparatus through a die. This die forms the extruder product into a specific shape. Individual pieces of food are created by periodically slicing off the end of the extruded stream of product. The individual pieces are then dried in a hot air dryer. Generally, the product is dried until it contains less than 15% moisture, and preferably about 5 to 10% moisture. The dried particles or pieces are then transferred by bulk conveyor to a coating drum and sprayed with fat. Other liquids, such as, for example, phosphoric acid may alternatively be applied to the pieces, or applied in addition to the fat. The resulting pellets or kibbles constitute the basal pet food preparation, the palatability of which will be enhanced using the palatability-enhancing compositions described herein.

Moist pet foods that are gravy-based or jelly-based can be prepared by grinding meat, meat mimetics, meat by-products, carbohydrates and/or grains, texturing agents, and forming the ground mixture via low pressure extrusion, then cooking through a steaming tunnel. At the tunnel outlet, the mixture is cut into pieces. The gravy- or jelly-type matrix is added to the resulting pieces, then sealed in cans or pouches and retorted, so as to obtain chunks-in gravy or chunks-in jelly food products.

Moist pet foods that are not gravy-based or jelly-based can be prepared by grinding meat, meat mimetics, meat by-products, carbohydrates and/or grains, and mixing with water and texturing agents. Then, the overall mixture is sealed in cans and retorted, so as to obtain loaves.

The addition step a) mentioned above can thus be performed, depending on the cat food and palatability-enhancing composition, either by incorporating or including said palatability-enhancing composition into the cat food preparation, or by coating said cat food preparation with said palatability-enhancing composition.

For example, one can cite a method for coating dry pet foods such as kibbles. Kibbles of uncoated, extruded basal pet food can be placed in a container such a tub or a coating drum for mixing. A fat, such as pork fat or poultry fat, is heated and then sprayed onto the pet food in a manner to obtain a coating of the kibbles. The coating need not be a continuous layer, but preferably is uniform. After the fat, a palatability-enhancing composition may be applied as either a liquid or a dry powder, while the product is mixing. A liquid palatability-enhancing composition is typically sprayed on while a dry palatability-enhancing composition is typically dusted on. Alternatively, palatability-enhancing compositions can be mixed with the fat and applied concurrently. Yet alternatively, palatability-enhancing compositions are coated before deposition of fat.

Alternatively, the palatability-enhancing composition can be incorporated or included into the pet food preparation according to the following method. The palatability-enhancing composition is contacted with the raw ingredients of the pet food preparation prior to cooking. In this case, the palatability-enhancing composition is combined to proteins, fibre, carbohydrates and/or starch, etc., of the basal food preparation and is cooked with those materials in the cooker-extruder.

Inclusion into moist pet foods can be achieved as follows. The liquid or dry palatability-enhancing composition can be applied in a gravy- or jelly-type matrix during the blending process in addition to the other pet food ingredients. The liquid or dry palatability-enhancing composition can also be applied into a meat-by mixtures for chunks or loaf preparation. In this case, it can be added to raw materials before or after the grinding process. The meat-by mixture may be cooked in a steam or grilling oven in the case of chunks manufacturing, or directly sealed in cans in the case of loaf manufacturing.

Palatability enhancers are generally useful in pet foods such as nutritionally-balanced mixtures containing appropriate pet food ingredients including proteins, fibre, carbohydrates and/or starch, etc. Such mixtures are well known to those skilled in the art, and their composition depends on many factors such as, for example, the desired food balance for the specific type of pet. Additional pet food ingredients may include vitamins, minerals, seasonings, preservatives, and surfactants. The food balance, including the relative proportions of vitamins, minerals, lipids, proteins and carbohydrates, is determined according to the known dietary standards in the veterinary field, for example by following recommendations of the National Research council (NRC), or the guidelines of the American Association of Feed Control Officials (AAFCO).

According to another aspect, the present invention is directed to a cat food having enhanced palatability comprising a palatability-enhancing composition as described above.

Preferably, said cat food is obtainable by the foregoing method of preparation.

Preferably, said cat food is selected from wet nutritionally-balanced cat foods, dry nutritionally-balanced cat foods, semi-moist nutritionally-balanced cat foods, cat supplements, cat treats, and cat toys.

Wet nutritionally-balanced cat foods are preferably selected from the group consisting of: chunks-in-jelly food products, chunks-in-gravy food products, loafs, and soups.

Dry nutritionally-balanced cat foods are preferably kibbles.

A further aspect of the present invention concerns a method for feeding cats comprising at least:
a) providing a cat food as disclosed above; and
b) feeding said cat food to cats.

A further aspect of the present invention is related to a kit for enhancing the palatability of a cat food comprising, in one or more containers in a single package:
a) one or more mixtures of free amino acids comprising:
   - at least two amino acids selected from the group consisting of:
      Ala, Glu, Pro, Leu, Asp, Tyr, Phe (List I), or
      Met, Glu, Pro, Gly, Leu, Asp, Tyr, Phe (List II); or
   - at least three amino acids selected from the group consisting of:
      Ala, Met, Glu, Pro, His, Gly, Arg, Leu, Asp, Tyr, Phe (List III);
b) optionally, one or more palatability-enhancing composition ingredients;
c) optionally, one or more palatability-enhancing compositions as described above; and
d) optionally, at least one cat food ingredient.

Preferably, said mixtures in a) further comprise one or more additional free amino acids selected from the group consisting of:
Thr, Lys, Cys, Trp, Ile, Ser, Val, Asn, Gln (List IV).

Preferably, said free amino acids are present in said mixtures in appropriate amounts as described above (in particular, in Table(s) 2, 3, and/or 4).

Preferably, said kit further comprises a means for communicating information about or instructions for using said mixtures and, optionally, said palatability-enhancing composition ingredients and/or said palatability-enhancing compositions and/or said cat food ingredient(s).

The above-described palatability-enhancing compositions provide significant advantages over the prior art. The effects of the present invention can be measured by a test that is commonly called "two-bowl test" or "versus test". Of course, the person skilled in the art is free to use any other appropriate test than the two bowl test herein described to determine preference. Such alternative tests are well known in the art.

### Principle of the two-bowl test:

The test is based on the postulate whereby the more food consumed, the more palatable it is.

Individual versus (Two bowls) appetence tests, based on the comparison between two foods, were carried out. Tests are performed either on panel of 36 dogs or on panel of 40 cats, depending on the test's objectives.

### Operating method of the test:

- Identical amounts of food A and food B were weighed out and placed in identical bowls. The amount present in each ration enables the daily requirements to be met.
- Distribution of the bowls:
   Dog test: the bowls were placed in an individual feed trough accessible to dogs.
   Cat test: The bowls were presented at the same time to each cat in an individual loose box and their positions were switched at each meal to avoid a choice led by handedness.
- Duration of the test:
   * Cat test for dry food: from about 15 minutes to about 20 hours (if one of the two bowls was entirely eaten before the end of the test, the two bowls were removed, and the test was stopped);
   * Cat test for wet food: from about 15 minutes to about 30 minutes (if one of the two bowls was entirely eaten before the end of the test, the two bowls were removed, and the test was stopped);
   * Dog test: from about 15 minutes to about 30 minutes (if one of the two bowls was entirely eaten before the end of the test, the two bowls were removed, and the test was stopped). Parameters studied
- Measured parameters: First food consumed ("initial appeal") and amount of each food consumed by the end of the test;
- Calculated parameters: individual consumption ratio in % (CR)
CR_{A} = consumption of A (g) × 100/(consumption of A+B) (g)
CR_{B} = consumption of B (g) × 100/(consumption of A+B) (g);
⇒ Average consumption ratio (ACR) = average of all individual ratios (an equal importance is given to each animal, regardless of its size and of its corresponding consumption).

If animals have higher or lower consumption compared to predetermined values (which are function of, e.g., the animal weight and/or metabolism), they are not taken into account into statistical treatment.

### Statistical analysis

Statistical analysis was used to determine if there was a significant difference between the 2 ratios. A Student's t-test with 3 error thresholds, namely 5%, 1% and 0.1 %, was performed.

A Chi-square test was used to determine if there was a significant difference between the number of pets with Food A as first food eaten and the number of pets with Food B as first food eaten.

Significance levels are noted as below:

| | | |
|---|---|---|
| NS | not significant | (p > 0.05) |
| * | significant | (p < 0.05) |
| ** | highly significant | (p < 0.01) |
| *** | very highly significant | (p < 0.001) |

The present invention will be further described by reference to the following examples, which are presented for the purpose of illustration only and are not intended to limit the scope of the invention.

### EXAMPLES

### EXAMPLE 1: DRY CAT FOOD

A nutritionally-balanced dry food composition (hereinafter referred to as "diet"), suitable for consumption by cats and obtained after an extrusion and drying process, was prepared.

Control diet 1 was coated with 6% poultry fat and 2% of a dry palatability-enhancing composition made of: 25% of trisodium pyrophosphate + 75% of poultry liver digest.

Experimental diet 1 was coated with 6% poultry fat and 2% of a dry palatability-enhancing composition made of: 25% of trisodium pyrophosphate + 30% of poultry liver digest + 45% of a mixture of amino acids according to Table 5.

The palatability test was repeated with a different batch of the dry palatability-enhancing composition. Thus, compositions of control diet 1bis and experimental diet 1bis were identical to those of control diet 1 and experimental diet 1 above, respectively, except that another batch of the dry palatability-enhancing composition was used.

**Table 5**

| **Amino acid** | **Amount (% by weight in the amino acid mixture)** |
|---|---|
| Ala | 10.11 |
| Glu | 10.99 |
| Pro | 5.49 |
| Leu | 11.65 |
| Asp | 6.37 |
| Tyr | 3.96 |
| Phe | 5.71 |
| Met | 3.30 |
| Gly | 3.96 |
| His | 2.64 |
| Arg | 7.69 |
| Lys | 7.03 |
| Val | 5.71 |
| Ile | 5.27 |
| Ser | 4.40 |
| Thr | 4.18 |
| Cys | 1.54 |

As shown in Table 6 below, consumption of the food was significantly different between control diet 1 and experimental diet 1, and between control diet 1bis and experimental diet 1bis, demonstrating the higher palatability for cat of the experimental diet comprising the mixture of amino acids of Table 5, and showing the robustness of the observed effect.

**Table 6**

| **Test day** | **Food A** | **Food B** | **Consumption ratio** | | **Significance** | **Number of validated animals** |
|---|---|---|---|---|---|---|
| | | | **% A** | **%B** | | |
| Day 1 | Control Diet 1 | Experimental Diet 1 | *32* | *68* | *** | 40 |
| Day 2 | | | *28* | *72* | *** | 40 |
| Day 1 (repetition) | Control Diet 1bis | Experimental Diet 1bis | *38* | *62* | ** | 38 |
| Day 2 (repetition) | | | *30* | *70* | *** | 39 |

### EXAMPLE 2: DRY CAT FOOD

A nutritionally-balanced dry food composition suitable for consumption by cats, obtained after an extrusion and drying process, was prepared.

Control diet 2 was coated with 8% poultry fat and 1.5% of a dry palatability-enhancing composition made of: 33.4% of trisodium pyrophosphate + 33.3% of poultry liver digest + 33.3% of brewer's yeast.

Experimental Diet 2 was coated with 8% poultry fat and 2.38% of a dry palatability-enhancing composition made of: 21.0% of trisodium pyrophosphate + 10.5% of poultry liver digest + 10.5% of brewer's yeast + 58.0% of a mixture of amino acids according to Table 7.

**Table 7**

| **Amino acid** | **Amount (% by weight in the amino acid mixture)** |
|---|---|
| Ala | 14.42 |
| Glu | 15.67 |
| Pro | 7.83 |
| Asp | 9.08 |
| Gly | 16.00 |
| His | 3.76 |
| Arg | 10.97 |
| Lys | 10.03 |
| Ser | 6.28 |
| Thr | 5.96 |

As shown in Table 8 below, consumption of the food was significantly different between control diet 2 and experimental diet 2, demonstrating the higher palatability of the experimental diet 2 comprising the mixture of amino acids of Table 7.

**Table 8**

| **Test day** | **Food A** | **Food B** | **Consumption ratio** | | **Significance** | **Number of validated animals** |
|---|---|---|---|---|---|---|
| | | | **% A** | **%B** | | |
| Day 1 | Control Diet 2 | Experimental Diet 2 | *36* | *64* | ** | 27 |
| Day 2 | | | *42* | *58* | * | 27 |

### COMPARATIVE EXAMPLE 3: DRY DOG FOOD

A nutritionally-balanced dry food composition suitable for consumption by dogs, obtained after an extrusion and drying process, was prepared.

Control diet 3 was coated with 6% pork fat and 1% of a dry palatability-enhancing composition made of 100% pork liver digest.

Experimental diet 3 was coated with 6% pork fat and 1.5% of a dry palatability-enhancing composition made of: 66.7% pork liver digest + 33.3% of a mixture of amino acids as disclosed in Table 5 above. As in Example 1 above, the palatability test was repeated with a different batch of the dry palatability-enhancing composition. Thus, compositions of control diet 3bis and experimental diet 3bis were identical to those of control diet 3 and experimental diet 3 above, respectively, except that another batch of the dry palatability-enhancing composition was used.

As shown in Table 9 below, first choice and consumption of the food were significantly different between control diet 3 and experimental diet 3. But, for control diet 3bis and experimental diet 3bis, no statistical significant result was obtained. This showed that the palatability-enhancing composition comprising the mixture of amino acids of Table 5 did not give reproducible results with dogs, and illustrated the lack of robustness of this composition for dogs.

**Table 9**

| **Test day** | **Food A** | **Food B** | **1^{rst} choice** | **Consumption ratio** | | **Significancce** | **Number of validated animals** |
|---|---|---|---|---|---|---|---|
| | | | | **% A** | **%B** | | |
| Day 1 | Control Diet 3 | Experiment al diet 3 | *B** | *34* | *66* | * | 29 |
| Day 1 (repetition) | Control Diet 3bis | Experiment al diet 3bis | *B NS* | *54* | *46* | NS | 35 |

### EXAMPLE 4: WET CAT FOOD

A nutritionally-balanced wet food composition suitable for consumption by cats in the form of a loaf was prepared. The loaf products were prepared by grinding and mixing selected ingredients, obtaining a slurry that was transferred into cans, those cans being retorted.

### Loaf control diet 4:

| | |
|---|---|
| Poultry and pork tissues | 51.32% |
| Wheat flour | 5.00% |
| Texturing agents | 0.98% |
| Minerals and vitamins premix | 0.30% |
| Trisodium pyrophosphate | 0.60% |
| Water | 41.80% |

### Loaf experimental diet 4:

| | |
|---|---|
| Poultry and pork tissues | 51.32% |
| Wheat flour | 5.00% |
| Texturing agents | 0.98% |
| Minerals and vitamins premix | 0.30% |
| Trisodium pyrophosphate | 0.60% |
| Mixture of amino acids of Table 5 | 1.40% |
| Water | 40.40% |

As shown in Table 10 below, consumption of the food is significantly different between control diet 4 and experimental diet 4, demonstrating the higher palatability for cats of the experimental diet 4 comprising the mixture of amino acids of Table 5.

**Table 10**

| **Test day** | **Food A** | **Food B** | **Consumption ratio** | | **Significance** | **Number of validated animals** |
|---|---|---|---|---|---|---|
| | | | **% A** | **%B** | | |
| Day 1 | Control Diet 4 | Experimental diet 4 | *41* | *59* | * | 40 |
| Day 2 | | | *45* | *55* | * | 40 |

### EXEMPLE 5: WET CAT FOOD

A nutritionally-balanced wet food composition suitable for consumption by cats in the form of a loaf was prepared. The loaf products were prepared by grinding and mixing selected ingredients, obtaining a slurry that was transferred into cans, those cans being retorted. The palatability-enhancing composition comprised poultry digest only in the control diet whereas it comprised poultry digest and the mixture of amino acids of Table 11 below in the experimental diet.

### Loaf control diet 5:

| | |
|---|---|
| Poultry and pork tissues | 45.05% |
| Wheat flour | 5.00 % |
| Texturing agents | 0.98% |
| Minerals and vitamins premix | 0.30% |
| Poultry digest | 5.00% |
| Water | 43.67% |

### Loaf experimental diet 5:

| | |
|---|---|
| Poultry and pork tissues | 45.05% |
| Wheat flour | 5.00 % |
| Texturing agents | 0.98% |
| Minerals and vitamins premix | 0.30% |
| Poultry digest | 5.00% |
| Mixture of amino acids of Table 11 | 1.00% |
| Water | 42.67% |

**Table 11**

| **Amino acid** | **Amount (% by weight in the amino acid mixture)** |
|---|---|
| Ala | 25.00 |
| Glu | 25.00 |
| Pro | 12.50 |
| Asp | 12.50 |
| Leu | 12.50 |
| Tyr | 12.50 |

As shown in Table 12 below, consumption of the food is significantly different between control diet 5 and experimental diet 5, demonstrating the higher palatability for cats of the experimental diet 5 comprising the mixture of amino acids of Table 11.

**Table 12**

| **Test day** | **Food A** | **Food B** | **Consumption ratio** | | **Significance** | **Number of validated animals** |
|---|---|---|---|---|---|---|
| | | | **% A** | **%B** | | |
| Day 1 | Control Diet 5 | Experimental diet 5 | *35* | *65* | ** | 33 |
| Day 2 | | | *39* | *61* | * | 35 |

### EXAMPLE 6: WET CAT FOOD

A nutritionally-balanced wet food composition suitable for consumption by cats in the form of chunks in jelly was prepared.

### • Chunk-in-jelly control diet 6:

- Recipe for the chunks:

| | |
|---|---|
| Poultry and pork tissues | 81.72% |
| Texturing agents | 4.80% |
| Wheat flour | 5.00% |
| Salt | 0.60% |
| Vitamins and minerals | 0.60% |
| Tripolyphosphate sodium | 0.65% |
| Water | 6.63% |

Chunks were dosed in 100g pouches (50g chunks per pouch).
- Recipe for the jelly:

| | |
|---|---|
| Water | 94.84% |
| Caramel | 0.16% |
| Texturing agents | 1.00% |
| Reducing sugars | 0.60% |
| Cysteine and Glycine | 1.46% |
| Trisodium pyrophosphate | 1.92% |
| Corn oil | 0.02% |

The jelly was dosed in the 100g pouches containing the chunks (50g jelly per pouch). The palatability-enhancing composition was present in the jelly and consisted of reducing sugars, cysteine and glycine, and trisodium pyrophosphate.

### • Chunk-in-jelly experimental diet 6:

The recipe for the chunks was the same as for the chunk-in-jelly control diet 6, except the palatability-enhancing composition that contained the mixture of amino acids of Table 5, further to reducing sugars, cysteine and glycine, and trisodium pyrophosphate.
Recipe for the jelly:

| | |
|---|---|
| Water | 94.84% |
| Caramel | 0.16% |
| Texturing agents | 1.00% |
| Reducing sugars | 0.30% |
| Cysteine and Glycine | 0.73% |
| Trisodium pyrophosphate | 1.92% |
| Corn oil | 0.02% |
| Mixture of amino acids of Table 5 | 1.03% |

As shown in Table 13 below, consumption of the food is significantly different between control diet 6 and experimental diet 6, demonstrating the higher palatability for cats of the experimental diet 6 comprising the mixture of amino acids of Table 5.

**Table 13**

| **Test day** | **Food A** | **Food B** | **Consumption ratio** | | **Significance** | **Number of validated animals** |
|---|---|---|---|---|---|---|
| | | | **% A** | **%B** | | |
| Day 1 | Control Diet 6 | Experimental Diet 6 | *40* | *60* | ** | 39 |
| Day 2 | | | *38* | *62* | *** | 39 |

### EXAMPLE 7: DRY CAT FOOD

A nutritionally-balanced dry food composition suitable for consumption by cats, obtained after an extrusion and drying process, was prepared.

Control diet 7 was coated with 6% poultry fat and 2% of a dry palatability-enhancing composition made of 55% pork liver digest + 30% of trisodium pyrophosphate + 15% of brewer's yeast.

Experimental diet 7a was coated with 6% poultry fat and 2% of a dry palatability-enhancing composition made of: 47.5% pork liver digest + 30% of trisodium pyrophosphate + 7.5% of brewer's yeast + 15% of a mixture of amino acids as disclosed in Table 14, illustrating List I, List II, and List III.

Experimental diet 7b was coated with 6% poultry fat and 2% of a dry palatability-enhancing composition made of: 47.5% pork liver digest + 30% of trisodium pyrophosphate + 7.5% of brewer's yeast + 15% of a mixture of amino acids as disclosed in Table 15, illustrating a combination different from List I or List II or List III.

**Table 14**

| **Amino acid** | **Amount (% by weight in the amino acid mixture)** |
|---|---|
| Ala | 33.3 |
| Met | 33.3 |
| Glu | 33.3 |

**Table 15**

| **Amino acid** | **Amount (% by weight in the amino acid mixture)** |
|---|---|
| Lys | 33.3 |
| Met | 33.3 |
| Cys | 33.3 |

The palatability results obtained showed that consumption was significantly higher for experimental diet 7a, demonstrating the better palatability of the palatability-enhancing composition containing the mixture of amino acids of Table 14 compared to the composition containing the mixture of amino acids of Table 15. This illustrated the interest for enhancing palatability to select amino acids in List I, List II, and/or List III.

**Table 16**

| **Test day** | **Food A** | **Food B** | **Consumption ratio** | | **Significance** | **Number of validated animals** |
|---|---|---|---|---|---|---|
| | | | **% A** | **%B** | | |
| Day 1 | | | *35* | *65* | * | 36 |
| Day 2 | Control Diet 7 | Experimental Diet 7a | *33* | *67* | ** | 38 |
| Day 1 | | | *40* | *60* | * | 38 |
| Day 2 | Control Diet 7 | Experimental Diet 7b | *45* | *55* | NS | 37 |
| Day 1 | | | *60* | *40* | ** | 37 |
| Day 2 | Experimental Diet 7a | Experimental Diet 7b | *59* | *41* | * | 38 |

### EXAMPLE 8: DRY CAT FOOD

A nutritionally-balanced dry food composition suitable for consumption by cats, obtained after an extrusion and drying process, was prepared.

Control diet 8 was coated with 6% poultry fat and 3% of a liquid palatability-enhancing composition made of 100% poultry liver digest.

Experimental diet 8 was coated with 6% poultry fat and 3% of a liquid palatability-enhancing composition made of 97% poultry liver digest + 3% of a mixture of amino acids as disclosed in Table 17 below, illustrating the List III.

**Table 17**

| **Amino acid** | **Amount (% by weight in the amino acid mixture)** |
|---|---|
| Arg | 33.3 |
| His | 33.3 |
| Gly | 33.3 |

Control diet 9 was coated with 6% poultry fat, then with 3% of a liquid palatability-enhancing composition made of 100% poultry liver digest, and finally with 2% of a dry, poultry-based palatability enhancer of the commercial range C'SENS (SPF, France).

Experimental diet 9 was coated with 6% poultry fat and 3% of a liquid palatability-enhancing composition made of: 97% poultry liver digest + 3% of a mixture of amino acids as disclosed in Table 17 above, illustrating the list III, and finally with 2% of a dry, poultry-based palatability enhancer of the commercial range C'SENS (SPF, France).

As shown in Table 18 below, consumption of the food was significantly different between control diet 8 or 9 and experimental diet 8 or 9, respectively, demonstrating the higher palatability for cats of the experimental diets comprising the mixture of amino acids of Table 17.

**Table 18**

| **Test day** | **Food A** | **Food B** | **Consumption ratio** | | **Signifi cance** | **Number of validated animals** |
|---|---|---|---|---|---|---|
| | | | **% A** | **%B** | | |
| Day 1 | | | *39* | *61* | * | 37 |
| Day 2 | Control Diet 8 | Experimental Diet 8 | *32* | *68* | *** | 38 |
| Day 1 | | | *37* | *63* | ** | 39 |
| Day 2 | Control Diet 9 | Experimental Diet 9 | *40* | *60* | * | 39 |

## Claims

1. Use of a mixture of free amino acids comprising at least two amino acids selected from the group consisting of:
Ala, Glu, Pro, Leu, Asp, Tyr, Phe (List I), or
Met, Glu, Pro, Gly, Leu, Asp, Tyr, Phe (List II),
for preparing a cat food palatability-enhancing composition, with the exception of a cat drink palatability-enhancing composition and a cat beverage palatability-enhancing composition; said composition comprising 1 to 70% by weight of said mixture.

2. Use of a mixture of free amino acids comprising at least three amino acids selected from the group consisting of:
Ala, Met, Glu, Pro, His, Gly, Arg, Leu, Asp, Tyr, Phe (List III),
for preparing a cat food palatability-enhancing composition, with the exception of a cat drink palatability-enhancing composition and a cat beverage palatability-enhancing composition; said composition comprising 1 to 70% by weight of said mixture.

3. The use according to claim 1 or 2, wherein said selected amino acids are present in an amount as set forth in the Table below:
| **Amino acid** | **Amount (% by weight of the palatability-enhancing composition)** |
|---|---|
| Ala | 0.08 - 30 |
| Glu | 0.10 - 20 |
| Pro | 0.05 - 20 |
| Leu | 0.08 - 25 |
| Asp | 0.05 - 20 |
| Tyr | 0.05 - 10 |
| Phe | 0.05 - 10 |
| Met | 0.02 - 11 |
| Gly | 0.04 - 20 |
| His | 0.01 - 10 |
| Arg | 0.06 - 17 |

4. The use according to anyone of claims 1 to 3, wherein said mixture further include one or more additional free amino acids selected from the group consisting of:
Thr, Lys, Cys, Trp, Ile, Ser, Val, Asn, Gln (List IV).

5. A method for preparing a cat food palatability-enhancing composition, with the exception of a cat drink palatability-enhancing composition and a cat beverage palatability-enhancing composition, comprising:
a) providing palatability-enhancing composition ingredients;
b) if necessary, grinding one or more of said ingredients;
c) providing a mixture of free amino acids comprising at least two amino acids selected from the group consisting of:
Ala, Glu, Pro, Leu, Asp, Tyr, Phe (List I), or
Met, Glu, Pro, Gly, Leu, Asp, Tyr, Phe (List II);
d) mixing 1 to 70% by weight of said mixture with said palatability-enhancing composition ingredients of step a) and/or step b); and
e) obtaining said cat food palatability-enhancing composition.

6. The method according to claim 5, wherein the palatability-enhancing composition ingredients comprise at least one pyrophosphate.

7. The method according to claim 5 or 6, wherein the palatability-enhancing composition ingredients comprise at least one alkali metal polyphosphate.

8. A method for preparing a cat food palatability-enhancing composition, with the exception of a cat drink palatability-enhancing composition and a cat beverage palatability-enhancing composition, comprising:
a) providing palatability-enhancing composition ingredients;
b) if necessary, grinding one or more of said ingredients;
c) providing a mixture of free amino acids comprising at least three amino acids selected from the group consisting of:
Ala, Met, Glu, Pro, His, Gly, Arg, Leu, Asp, Tyr, Phe (List III);
d) mixing 1 to 70% by weight of said mixture with said palatability-enhancing composition ingredients of step a) and/or step b); and
e) obtaining said cat food palatability-enhancing composition.

9. The method according to claim 8, wherein the palatability-enhancing composition ingredients comprise at least one pyrophosphate.

10. The method according to claim 8 or 9, wherein the palatability-enhancing composition ingredients comprise at least one alkali metal polyphosphate.

11. A cat food palatability-enhancing composition obtainable by a method according to any one of claims 6 or 7 or 9 or 10.

12. A method for producing a cat food having enhanced palatability, with the exception of a cat drink having enhanced palatability and a cat beverage having enhanced palatability said method comprising:
a) adding to a cat food preparation, a cat food palatability-enhancing composition according to claim 11; and
b) obtaining a cat food having enhanced palatability.

13. A cat food having enhanced palatability, with the exception of a cat drink having enhanced palatability and a cat beverage having enhanced palatability, said cat food comprising a cat food palatability-enhancing composition according to claim 11.

14. A method for feeding cats comprising at least:
a) providing a cat food according to claim 13; and
b) feeding said cat food to cats.

15. A kit for enhancing the palatability of a cat food comprising, in one or more containers in a single package:
a) one or more mixtures of free amino acids comprising:
- at least two amino acids selected from the group consisting of:
Ala, Glu, Pro, Leu, Asp, Tyr, Phe (List I), or
Met, Glu, Pro, Gly, Leu, Asp, Tyr, Phe (List II); or
- at least three amino acids selected from the group consisting of:
Ala, Met, Glu, Pro, His, Gly, Arg, Leu, Asp, Tyr, Phe (List III);
b) and one or more cat food palatability-enhancing compositions of claim 11.

## Patentansprüche

1. Verwendung einer Mischung von freien Aminosäuren, umfassend mindestens zwei Aminosäuren, die ausgewählt sind aus der Gruppe bestehend aus:
Ala, Glu, Pro, Leu, Asp, Tyr, Phe (Liste I), oder
Met, Glu, Pro, Gly, Leu, Asp, Tyr, Phe (Liste II),
zur Herstellung einer geschmacksverbessernden Zusammensetzung für ein Katzenfutter, mit Ausnahme einer geschmacksverbessernden Zusammensetzung für einen Katzentrank und einer geschmacksverbessernden Zusammensetzung für ein Katzengetränk; wobei die Zusammensetzung 1 bis 70 Gew.% der Mischung umfasst.

2. Verwendung einer Mischung von freien Aminosäuren, umfassend mindestens drei Aminosäuren, die ausgewählt sind aus der Gruppe bestehend aus:
Ala, Met, Glu, Pro, His, Gly, Arg, Leu, Asp, Tyr, Phe (Liste III),
zur Herstellung einer geschmacksverbessernden Zusammensetzung für ein Katzenfutter, mit Ausnahme einer geschmacksverbessernden Zusammensetzung für einen Katzentrank und einer geschmacksverbessernden Zusammensetzung für ein Katzengetränk; wobei die Zusammensetzung 1 bis 70 Gew.% der Mischung umfasst.

3. Verwendung nach Anspruch 1 oder 2, wobei die ausgewählten Aminosäuren in einer Menge gemäß der folgenden Tabelle vorhanden sind:
| **Aminosäure** | **Menge (Gew.% der geschmacksverbessernden Zusammensetzung)** |
|---|---|
| Ala | 0,08-30 |
| Glu | 0,10-20 |
| Pro | 0,05-20 |
| Leu | 0,08-25 |
| Asp | 0,05-20 |
| Tyr | 0,05-10 |
| Phe | 0,05-10 |
| Met | 0,02-11 |
| Gly | 0,04-20 |
| His | 0,01-10 |
| Arg | 0,06-17 |

4. Verwendung nach einem der Ansprüche 1 bis 3, wobei die Mischung ferner eine oder mehrere freie Aminosäuren umfasst, die ausgewählt sind aus der Gruppe bestehend aus:
Thr, Lys, Cys, Trp, Ile, Ser, Val, Asn, Gln (Liste IV).

5. Verfahren zur Herstellung einer geschmacksverbessernden Zusammensetzung für ein Katzenfutter, mit Aufnahme einer geschmacksverbessernden Zusammensetzung für einen Katzentrank und einer geschmacksverbessernden Zusammensetzung für ein Katzengetränk, umfassend:
a) Bereitstellen von Inhaltsstoffen einer geschmacksverbessernden Zusammensetzung;
b) falls erforderlich, Mahlen von einem oder mehreren der Inhaltsstoffe;
c) Bereitsstellen einer Mischung von freien Aminosäuren, umfassend mindestens zwei Aminosäuren, die ausgewählt sind, aus der Gruppe bestehend aus:
Ala, Glu, Pro, Leu, Asp, Tyr, Phe (Liste I), oder
Met, Glu, Pro, Gly, Leu, Asp, Tyr, Phe (Liste II);
d) Mischen von 1 bis 70 Gew.% der Mischung mit den Inhaltsstoffen der geschmacksverbessernden Zusammensetzung nach Schritt a) und/oder Schritt b); und
e) Erhalten der geschmacksverbessernden Zusammensetzung für ein Katzenfutter.

6. Verfahren nach Anspruch 5, wobei die Inhaltsstoffe der geschmacksverbessernden Zusammensetzung mindestens ein Pyrophosphat umfassen.

7. Verfahren nach Anspruch 5 oder 6, wobei die Inhaltsstoffe der geschmacksverbessernden Zusammensetzung mindesters ein Alkalimetallpolyphosphat umfassen.

8. Verfahren zur Herstellung einer geschmacksverbessernden Zusammensetzung für ein Katzenfutter, mit Ausnahme einer geschmacksverbessernden Zusammensetzung für einen Katzentrank und einer geschmacksverbessernden Zusammensetzung für ein Katzengetränk, umfassend:
a) Bereitstellen von Inhaltsstoffen einer geschmacksverbessernden Zusammensetzung;
b) falls erforderlich, Mahlen von einem oder mehreren der Inhaltsstoffe;
c) Bereitsstellen einer Mischung von freien Aminosäuren, umfassend mindestens drei Aminosäuren, die ausgewählt sind, aus der Gruppe bestehend aus:
Ala, Met, Glu, Pro, His, Gly, Arg, Leu, Asp, Tyr, Phe (Liste III);
d) Mischen von 1 bis 70 Gew.% der Mischung mit den Inhaltsstoffen der geschmacksverbessernden Zusammensetzung nach Schritt a) und/oder Schritt b); und
e) Erhalten der geschmacksverbessernden Zusammensetzung für ein Katzenfutter.

9. Verfahren nach Anspruch 8, wobei die Inhaltsstoffe der geschmacksverbessernden Zusammensetzung mindestens ein Pyrophosphat umfassen.

10. Verfahren nach Anspruch 8 oder 9, wobei die Inhaltsstoffe der geschmacksverbessernden Zusammensetzung mindestens ein Alkalimetallpolyphosphat umfassen.

11. Geschmacksverbessernde Zusammensetzung für ein Katzenfutter, herstellbar durch das Verfahren nach einem der Ansprüche 6 oder 7 oder 9 oder 10.

12. Verfahren zur Herstellung eines Katzenfutters mit verbessertem Geschmack, mit der Ausnahme eines Katzentranks mit verbessertem Geschmack und eines Katzengetränks mit verbessertem Geschmack, umfassend:
a) Hinzufügen zu einer Katzenfutterzusammensetzung, einer geschmacksverbessernden Zusammensetzung für ein Katzenfutter nach Anspruch 11; und
b) Erhalten eines Katzenfutters mit verbessertem Geschmack.

13. Katzenfutter mit verbessertem Geschmack, mit Ausnahme eines Katzentranks mit verbessertem Geschmack und eines Katzengetränks mit verbessertem Geschmack, wobei das Katzenfutter eine geschmacksverbessernde Zusammensetzung für ein Katzenfutter nach Anspruch 11 umfasst.

14. Verfahren zum Füttern von Katzen, umfassend mindestens:
a) Bereitstellen eines Katzenfutters nach Anspruch 13; und
b) Füttern der Katzen mit dem Katzenfutter.

15. Kit zum Verbessern des Geschmacks eines Katzenfutters, umfassend in einem oder mehreren Behältern in einer einzelnen Packung:
a) eine oder mehrere Mischungen von freien Aminosäuren, umfassend:
- mindestens zwei Aminosäuren, die ausgewählt sind aus der Gruppe bestehend aus:
Ala, Glu, Pro, Leu, Asp, Tyr, Phe (Liste I), oder
Met, Glu, Pro, Gly, Leu, Asp, Tyr, Phe (Liste II); oder
- mindestens drei Aminosäuren, die ausgewählt sind aus der Gruppe bestehend aus:
Ala, Met, Glu, Pro, His, Gly, Arg, Leu, Asp, Tyr, Phe (Liste III);
b) und eine oder mehrere geschmacksverbessernde Zusammensetzungen für ein Katzenfutter nach Anspruch 11.

## Revendications

1. Utilisation d'un mélange d'acides aminés libres comprenant au moins deux acides aminés sélectionnés dans le groupe consistant on :
Ala, Glu, Pro, Leu, Asp, Tyr, Phe (Liste I), ou
Met, Glu, Pro, Uly, Leu, Asp, Tyr, Phe (Liste II),
pour préparer une composition améliorant l'appétence d'un aliment pour chat, à l'exception d'une composition améliorant l'appétence d'un produit à boire pour chat et d'une composition améliorant l'appétence d'une boisson pour chat ;
ladite composition comprenant 1 à 70 % en poids dudit mélange.

2. Utilisation d'un mélange d'acides aminés libres comprenant au moins trois acides aminés sélectionnés dans le groupe consistant en :
Ala, Met, Glu, Pro, His, Gly, Arg, Leu, Asp, Tyr, Phe (Liste III),
pour préparer une composition améliorant l'appétence d'un aliment pour chat, à l'exception d'une composition améliorant l'appétence d'un produit à boire pour chat et d'une composition améliorant l'appétence d'une boisson pour chat ;
ladite composition comprenant 1 à 70 % en poids dudit mélange.

3. Utilisation selon la revendication 1 ou 2, dans laquelle lesdits acides aminés sélectionnés sont présents dans une quantité telle qu'indiquée dans le tableau ci-dessous :
| **Acide aminé** | **Quantité (% en poids de la composition améliorant l'appétence)** |
|---|---|
| Ala | 0,08 à 30 |
| Glu | 0,10 à 20 |
| Pro | 0,05 à 20 |
| Leu | 0,08 à 25 |
| Asp | 0,05 à 20 |
| Tyr | 0,05 à 10 |
| Phe | 0,05 à 10 |
| Met | 0,02 à 11 |
| Gly | 0,04 à 20 |
| His | 0,01 à 10 |
| Arg | 0,06 à 17 |

4. Utilisation selon l'une quelconque des revendications 1 à 3, dans laquelle ledit mélange comprend en outre un ou plusieurs acides aminés libres supplémentaires sélectionnés dans le groupe consistant en :
Tyr, Lys, Cys, Trp, Ile, Ser, Val, Asn, Gln (Liste IV).

5. Méthode de préparation d'une composition améliorant l'appétence d'un aliment pour chat, à l'exception d'une composition améliorant l'appétence d'un produit à boire pour chat et d'une composition améliorant l'appétence d'une boisson pour chat, comprenant :
a) la fourniture d'ingrédients de composition améliorant l'appétence ;
b) si nécessaire, le broyage d'un ou plusieurs desdits ingrédients ;
c) la fourniture d'un mélange d'acides aminés libres comprenant au moins deux acides aminés sélectionnés dans le groupe consistant en :
Ala, Glu, Fro, Leu, Asp, Tyr, Phe (Liste I), ou
Met, Glu, Pro, Gly, Leu, Asp, Tyr, Phe (Liste II) ;
d) le mélange de 1 à 70 % en poids dudit mélange avec lesdits ingrédients de composition améliorant l'appétence de l'étape a) et/ou de l'étape b) ; et
e) l'obtention de ladite composition améliorant l'appétence d'un aliment pour chat.

6. Méthode selon la revendication 5, dans laquelle les ingrédients de la composition améliorant l'appétence comprennent au moins un pyrophosphate.

7. Méthode selon la revendication 5 ou 6, dans laquelle les ingrédients de composition améliorant l'appétence comprennent au moins un polyphosphate de métal alcalin.

8. Méthode de préparation d'une composition améliorant l'appétence d' un aliment pour chat, à l'exception d'une composition améliorant l'appétence d'un produit à boire pour chat et d'une composition améliorant l'appétence d'une boisson pour chat, comprenant :
a) la fourniture d'ingrédients de composition améliorant l'appétence ;
b) si nécessaire, le broyage d'un ou plusieurs desdits ingrédients ;
c) la fourniture d'un mélange d'acides aminés libres comprenant au moins trois acides aminés sélectionnés dans le groupe consistant en :
Ala, Met, Glu, Pro, His, Gly, Arg, Leu, Asp, Tyr, Phe (Liste III)
d) le mélange de 1 à 70 % en poids dudit mélange avec lesdits ingrédients de composition améliorant l'appétence de l'étape a) et/ou l'étape b) ; et
e) l'obtention de ladite composition améliorant l'appétence d'un aliment pour chat.

9. Méthode selon la revendication 8, dans laquelle les ingrédients de composition améliorant l'appétence comprennent au moins un pyrophosphate.

10. Méthode selon la revendication 8 ou 9, dans laquelle les ingrédients de composition améliorant l'appétence comprennent au moins un polyphosphate de métal alcalin.

11. Composition améliorant l'appétence d'un aliment pour chat pouvant être obtenus par une méthode selon l'une quelconque des revendications 6 ou 7 ou 9 ou 10.

12. Méthode de production d'un aliment pour chat ayant une appétence améliorée, à l'exception d'un produit à boire pour chat ayant une appétence améliorée et d'une boisson pour chat ayant une appétence améliorée, ladite méthode comprenant :
a) l'ajout à une préparation d'aliment pour chat d'une composition améliorant l'appétence d'un aliment pour chat selon la revendication 11 ; et
b) l'obtention d'un aliment pour chat ayant une appétence améliorée.

13. Aliment pour chat ayant une appétence améliorée, à l'exception d'un produit à boire pour chat ayant une appétence améliorée et d'une boisson pour chat ayant comprenant une composition améliorant l'appétence d'un aliment pour chat selon la revendication 11.

14. Méthode permettant de nourrir des chats comprenant au moins :
a) la fourniture d'un aliment pour chat selon la revendication 13 ; et
b) le fait de nourrir des chats avec ledit aliment pour chat.

15. Kit permettant d'améliorer l'appétence d'un aliment pour chat comprenant, dans un ou plusieurs contenants dans un seul emballage :
a) un ou plusieurs mélanges d'acides aminés libres comprenant :
- au moins deux acides aminés sélectionnés dans le groupe consistant en :
Ala, Glu, Pro, Leu, Asp, Tyr, Phe (Liste 1), ou Met, Glu, Pro, Gly, leu, Asp, Tyr, Phe (Liste II);
- au moins trois acides aminés libres sélectionnés dans le groupe consistant en :
Ala, Met, Glu, Pro, His, Gly, Arg, Leu, Asp, Tyr, Phe (Liste III) ;
b) et une ou plusieurs compositions améliorant l'appétence d'un aliment pour chat de la revendication 11.
